# EUROPÄISCHE PATENTANMELDUNG

(11) **EP 0 945 315 A2**
(43) Veröffentlichungstag der Anmeldung: **29.09.1999**
(21) Anmeldenummer: 99104517.0
(22) Anmeldetag: 06.03.1999
(51) Int. Cl.: B60R 21/32, B60R 16/00

(54) **Insassenschutzsystem mit Überwachung des Datenaustausches zwischen der Zentraleinheit und den verschiedenen Steuermodulen**

(30) Priorität: 25.03.1998 DE 19813123
(71) Anmelder: DaimlerChrysler AG, 70567 Stuttgart (DE)
(72) Erfinder: Fendt, Günter, 86529 Schrobenhausen (DE); Bischoff, Michael, 85111 Adelschlag (DE); Rinkens, Johannes, 85055 Ingolstadt (DE); Schäffer, Stefan, 86529 Schrobenhausen (DE); Wulff, Holger, 13086 Berlin (DE)
(74) Vertreter: Maute, Hans-Jürgen, Dipl.-Ing.

(57) **Zusammenfassung**

Die Erfindung betrifft ein Insassenschutzsystem, insbesondere in Kraftfahrzeugen, bei dem die Signale des Energie- und Datenaustausches zwischen einer Zentraleinheit und den jeweils den Insassenschutzeinrichtungen zugeordneten Steuermodulen mittels einer zusätzlichen Überwachungseinrichtung überwacht werden. Vorzugsweise weist die Überwachungseinrichtung für jede Busleitung des Bussystems eine von den Empfangseinheiten erster Art der Steuermodule abweichende Empfangseinheit zweiter Art zum Empfangen der Signale des stattfindenden Datenaustausches auf, die am Signalaustausch selbst nicht teilnimmt, ihn jedoch auf Fehler überwacht, indem diese die Signale des Datenaustausches abtastet und decodiert und analoge Größen des elektrischen Signals bestimmt. Die Signale werden hinsichtlich der Einhaltung vorgegebener Werte überprüft und abgespeichert.

## Beschreibung

Die Erfindung betrifft ein Verfahren zum Betreiben eines Insassenschutzsystems mit einer Zentraleinheit und über ein Bussystem zum Datenaustausch verbundenen Steuermodulen von Insassenschutzeinrichtungen gemäß dem Oberbegriff des Anspruches 1.

Derartige Insassenschutzsysteme sind mit einer Vielzahl von Steuermodulen ausgestattet und diese räumlich verteilt in einem Kraftfahrzeug angeordnet, wie bspw. der DE 196 19 117 A1 oder der DE 195 38 337 A1 entnommen werden kann. Es besteht eine nicht unerhebliche Gefahr von Störungen, die den Datenaustausch beeinflussen können. Neben defekten Steuermodulen und Leitungen können auch deren elektronische Bauelemente Toleranzen aufweisen, die zu Störungen führen. Die DE 195 38 337 A1 lehrt aus diesem Grunde, Schaltungskomponenten eines solchen Sicherheitssystems mit Selbsttesteinrichtungen zu versehen, welches diese auf fehlerfreie Funktion testen können. Diese Selbsttesteinrichtungen können jedoch nicht den Datenaustausch erfassen oder diesen auf Fehler prüfen.

Darüber hinaus kann der DE 196 16 293 A1 ein Bussystem für die Übertragung von Nachrichten zwischen einem Gerät und wenigstens einem Peripheriegerät entnommen werden, wobei im Peripheriegerät eine Empfangseinheit erster Art zum Datenaustausch vorgesehen ist, die aktiv am Datenaustausch teilnimmt und die aus einer Signalseparierung in Abhängigkeit des Signalpegels die empfangenen Daten entweder an eine Befehlsauswertung oder an eine Diagnoseauswertung weiterleitet. Fehler während des Datenaustausches können damit ebenfalls nicht erkannt werden.

Aufgabe der Erfindung ist daher, ein Verfahren zum Betreiben eines Insassenschutzsystems gemäß dem Oberbegriff des Anspruches 1 derart weiterzubilden, daß Störungen im Datenaustausch erkannt werden können.

Diese Aufgabe wird durch die kennzeichnenden Merkmale des Patentanspruchs 1 gelöst. Vorteilhafte Weiterbildungen sind den Unteransprüchen zu entnehmen.

Grundlegender Gedanke ist es, mittels einer Überwachungseinrichtung die Signale des zwischen den Steuermodulen und der Zentraleinheit stattfindenden Datenaustausches zu überwachen, und zwar indem der Datenaustausch zwischen Zentraleinheit und Steuermodulen zusätzlich mittels wenigstens einer Empfangseinheit zweiter Art, die im Gegensatz zu den Empfangseinheiten erster Art der Zentraleinheit und der Steuermodule am Datenaustausch nicht teilnimmt, erfaßt wird und in einer Überwachungseinheit hinsichtlich Fehlern ausgewertet wird.

Für Bussysteme mit mehreren Busleitungen bietet sich neben mehreren Überwachungseinheiten auch an, daß eine einzige Überwachungseinheit mit einer Empfangseinheit je Busleitung ausgestattet ist. Besonders vorteilhaft ist, wenn die Empfangseinheit(en) die Signale des stattfindenden Datenaustausches bereits vorverarbeiten, da hierdurch die Menge der weiterzuverarbeitenden und zu speichernden Daten bereits am Anfang reduziert wird.

Solche Überwachungseinrichtungen können für die Phase der Modellerprobung, bspw. in Testaufbauten und Testfahrzeuge, eingesetzt werden oder aber prinzipiell auch bei entsprechender Datenkomprimierung und Beschränkung auf einzelne Analyseaspekte in Serienfahrzeuge, die dann im Rahmen des Kundendienstservice ausgelesen werden.

Die Erfindung wird nachfolgend anhand von Ausführungsbeispielen und einer Figur näher erläutert. Diese Figur zeigt:
- Figur: Blockschema eines Insassenschutzsystems mit einer Überwachungseinrichtung zur Überwachung der Signale

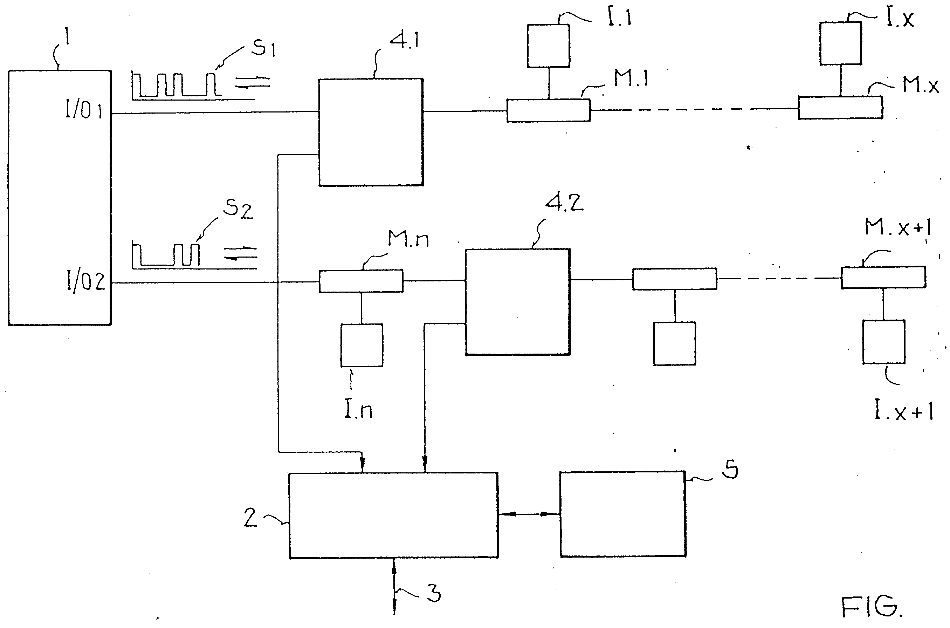

Die Figur zeigt ein Insassenschutzsystem mit Airbags, Gurtstraffern etc., wie es bspw. in Kraftfahrzeugen eingesetzt wird. Es besteht aus einer Zentraleinheit 1 zum Erzeugen von Steuerbefehlen, mittels derer die Steuermodule M.x (x: 1..x..n) von Insassenschutzeinrichtungen I.x (x: 1..x..n) angesteuert werden. Die Steuermodule M.x sind dabei untereinander sowie mit der Zentraleinheit 1 über I/O-Ports 1 und 2 in bspw. zwei Busleitungen angeordnet. Die Anzahl der Busleitungen und die Aufteilung der Steuermodule sowie die Ausbildung derBusleitung als Stich- oder Ringleitung kann dabei im Einzelfall selbstverständlich den jeweiligen Erfordernissen angepaßt sein. Es ist eine Überwachungseinrichtung zur Überwachung der Signale (S1 , S2) des Datenaustausches zwischen den Steuermodulen M.x sowie der Zentraleinheit 1 vorgesehen, die in diesem Ausführungsbeispiel ausgestaltet ist als eine Auswerteeinheit 2 mit dieser verbundenen Empfangseinheiten 4.1 und 4.2 sowie mit einem Speicher 5 zum Abspeichern der Daten. Grundsätzlich kann auch für jede Busleitung eine eigenständige Überwachungseinrichtung vorgesehen werden. Durch eine zentrale Auswerteeinheit 2 reduziert sich jedoch der Bauelementebedarf und damit die Kosten. Die Überwachungseinrichtung kann prinzipiell auch in die Zentraleinheit 1 integriert werden, indem die Empfangseinheiten 4.1 und 4.2 in die I/O-Ports 1 und 2 eingefügt und die logischen Funktionen von der Zentraleinheit 1 mit übernommen werden. Im folgenden soll jedoch weiter die separate Überwachungseinrichtung beschrieben werden. Dei Empfangseinheiten 4.1 und 4.2 können an beliebiger Stelle in die Busleitungen eingesetzt werden und verhalten sich dort im Prinzip passiv, d.h. sie werden nicht eigenständig adressiert. Vielmehr überwachen sie den jeweils auf den Busleitungen stattfindenden Datenaustausch. Die Signale S1 und S2 des Datenaustausches sind dabei digitale Signale, die jedoch aufgrund der elektrischen Eigenschaften der Busleitungen und Steuermodule M.x, insbesondere deren elektrischen Widerstand und kapazitive Wirkung, verfälscht, insbesondere gedämpft frequenzselektiv beeinflußt werden. Die Empfangseinheiten 4.1 und 4.2 weisen eine Reihe von Auswertemöglichkeiten der Signale S1 und S2 auf, beginnend von der Erfassung ihres logischen Pegels durch A/D-Wandlung bis hin zu Parametern, wie Strom- oder Spannugnsamplitude, Signalverzögerung etc. Die Empfangseinheiten 4.1 und 4.2 führen vorzugsweise bereits eine Vorverarbeitung der Signale des stattfindenden Datenaustausches durch, tasten diese bspw. ab, decodieren sie und vergleichen sie mit vorgegebenen Größen, Mustern oder Wertebereichen. Die so abgeleiteten Vorverabreitungsergebnisse werden an die Auswerteeinheit 2 gesandt, eventuell noch komprimiert und im Speicher 5 abgespeichert. Über die Schnittstelle 3 der Auswerteeinheit 2 kann dann einerseits der Speicher 5 ausgelesen werden oder aber auch eine automatische Fehleranzeige angesteuert werden, falls die Anzahl der Abweichungen über ein vorgegebenes Maß hinausgeht, im einfachsten Falle wenn der Speicher 5 voll ist. Selbstverständlich ist es grundsätzlich auch möglich, die Auswerteeinheit 2 direkt über die Schnittstelle 3 auszulesen, wodurch auf den Speicher 5 verzichtet werden könnte.

Im folgenden sollen nun eine Reihe von mit den Signalen zur Überwachung durchgeführten Auswertungen als Ausführungsbeispiele beschrieben werden.

Die wohl wichtigste Form der Überwachung ist zunächst die der Decodierbarkeit der Signale. Dazu versucht die Empfangseinheit wie jedes Steuermodul den Datenaustausch aus dem übertragenen Signal zu erfassen. Dazu ist neben der Pegelerkennung insbesondere auch eine erfolgreiche Synchronisation erforderlich. Durch eine selbsttaktende Synchronisaierung, bspw. eine Manchestercodierung der Daten in den Signalen wird dies deutlich vereinfacht. Durch die Manchestercodierung ist es weiterhin bekanntlich möglich, Einfachfehler im Signalpegel zu erkennen. Die Empfangseinheit erfaßt also als Vorverarbeitung des Signals zunächst deren logischen Pegel in den beiden Bithälften des manchestercodierten Signal- Bits hinsichtlich ihrer Antivalenz und setzt im einfachsten Fall ein Manchester-Error-Flag an die Auswerteeinheit. Selbstverständlich kann es auch vorgesehen werden, daß die Empfangseinheit zunächst nur die Digitalisierung des Signals durchführt und ihre logische Auswertung in der Auswerteeinheit erfolgt. Neben dem Fehlerereignis als solches kann die übertragene Datenfolge oder die Adresse oder der Absender des fehlerhaften Signals mit abgespeichert werden. Die Menge und Art der abgespeicherten Informationen kann dabei für den jeweiligen Anwendungsfall speziell konzipiert werden, bspw. stark komprimiert werden, indem nur die Anzahl der Abweichungen registriert wird, um möglichst lange mit einem vertretbaren Speichermedium arbeiten zu können.

Als Auswertungen im Digitalbereich des Signals ist außerdem eine Überwachung der Protokollgenerierung auf Fehler beim jeweiligen Absender des Signals vorgesehen, indem die aus dem Signal ableitbare Datenfolge auf Übereinstimmung mit bekannten Mustern oder Prüfsummenfehler hin verglichen wird.

Neben den logischen Pegeln der Signale erweist es sich gerade im Bereich der Prototyp-Analyse als besonders vorteilhaft, wenn zusätzlich die analogen elektrischen Größen des Signals mit überwacht werden. So werden die Signalspannung nicht nur zur Ermittlung des logischen Pegels bei Spannungsamplitudenmodulation betrachtet, sondern auch ihre analoge Größe. Dies ist insbesondere von Bedeutung, wenn mehrere voneinander abweichende Spannungssignalgenerierungsformen in einem Insassenschutzsystem angewendet werden, also mit unterschiedlichen Signalhüben, also Amplitudenunterschieden oder gar einer inversen Signalisierung gearbeitet wird. Neben einer im Normalbetrieb bspw.auf 24 ... 30 Volt transformierten Signalspannung muß im Notfall auch eine Signalisierung mit nur 8 Volt Signalspannung noch möglich sein. Eine Empfangseinheit muß dann aber neben einem korrekten Wechsel auf entsprechend andere Schwellwerte, wie dieser auch für die Steuermodule erforderlich ist, auch möglichst dieses andere Signalisierungsverfahren als Ereignis mit abzuspeichern, um eine gegebenenfalls höhere Fehlerquote dabei erkennen und zuordnen zu können. Auch bei einem Kurzschluß der Busleitung auf ein festes Spannungspotential, bspw. die Batteriespannung, kann über eine steuerbare Masseleitung eine Spannungssignalisierung über inverse Spannungssignale aufrechterhalten werden. Auch hier muß die Überwachungseinrichtung einen solchen Wechsel nicht nur erkennen und mitvollziehen, sondern auch zur Auswertung protokollieren. Die Spannungsamplituden werden dabei beispielsweise mit bestimmten zulässigen Wertebereichen verglichen und entsprechend codiert.

Bei einer Signalisierung über den Strom Wird selbstverständlich von der Empfangseinheit der Strom überwacht. So kann beispielsweise auch ein Kurzschluß einer Busleitung durch eine entsprechende Stromerhöhung registriert werden oder Abweichungen, die durch den Ausfall einzelner elektrischer Komponenten in einem Steuermodul herrühren, bis hin zu Leitungsunterbrechungen. Durch eine bekannte und begrenzte Stromaufnahme durch die einzelnen Steuermodule kann bereits der direkt der Zentraleinheit entzogene Strom eine entsprechende Auswertung ermöglichen. Dazu wären die Empfangseinheiten entsprechend direkt an der Zentraleinheit anzuordnen.

Gerade bei selbstsynchronisierenden Datenübertragungsverfahren für Insassenschutzsysteme kann es äußerst nützlich sein, auch die aktuelle Übertragungsrate zu erfassen, indem bspw. die Anzahl eines Oszillatortaktes zwischen zwei synchronisierenden Flankenwechseln eines manchestercodierten Signales jeweils erfaßt wird. Selbst wenn grundsätzlich mehrere Übertragungsraten zugelassen und von den Steuermodulen wie auch der Empfangseinheit verarbeitet werden können, kann es sich als wichtig erweisen, daß die gerade anliegende Übertragungsrate mit erfaßt und gespeichert wird, um beispielsweise Rückschlüsse auf die Zunahme der Fehlerhäufigkeit bei höheren Übertragungsraten ziehen zu können.

Außerdem soll die Signalverzögerung registriert werden, die auf einen bestimmten Steuerbefehl ein bestimmtes Steuermodul aufweist. Dazu kann bspw. der Steuerbefehl als Muster der Empfangseinheit vorgegeben werden, die Signale darauf überwacht. Beim Auftreten eines solchen Steuerbefehls wird nun die Zeitdauer in Form der Anzahl eines Oszillatortaktes erfaßt, bis ein bestimmtes Steuermodul antwortet.

Eine Überwachung solcher analoger elektrischer Größen des Signals ermöglicht eine viel detailierte Fehleranalyse, indem die Daten aus dem Speicher über die Schnittstelle in einen PC ausgelesen und dort mit statistischen Methoden untersucht werden.

## Patentansprüche

1. Verfahren zum Betreiben eines Insassenschutzsystems, insbesondere in Kraftfahrzeugen, bestehend aus einer Zentraleinheit (1) zum Erzeugen von Steuerbefehlen, insbesondere Auslösebefehlen, für Insassenschutzeinrichtungen (I.x) zugeordnete Steuermodule (M.x), die untereinander sowie mit der Zentraleinheit (1) über ein Bussystem mit wenigstens einer Busleitung zum Datenaustausch über entsprechende elektrische Signale (S1,S2) verbunden sind, wobei mittels Empfangseinheiten erster Art in der Zentraleinheit und den Steuermodulen der Datenaustausch erfolgt, **dadurch gekennzeichnet,** daß
a) der Datenaustausch nur zwischen den Empfangseinheiten erster Art der Zentraleinheit (1) und der Steuermodule (M.x) erfolgt, und
b) dieser Datenaustausch zwischen Zentraleinheit und Steuermodulen zusätzlich mittels wenigstens einer Empfangseinheit zweiter Art (4.1,4.2), die am Datenaustausch nicht teilnimmt, erfaßt wird und in einer Überwachungseinheit hinsichtlich Fehlern ausgewertet wird.

2. Verfahren nach Anspruch 1, **dadurch gekennzeichnet,** daß in den Empfangseinheiten (4.1,4.2) zweiter Art der Überwachungseinheit der Datenaustausch zwischen den Steuermodulen und der Zentraleinheit hinsichtlich Fehlern überwacht wird, indem
a) codierte Daten der Signale und/oder
b) analogen physikalischen Parameter des Datenaustausches erfaßt werden und
c) diese mit Sollgrößen verglichen werden.

3. Verfahren nach Anspruch 2, **dadurch gekennzeichnet, daß** die Empfangseinheiten zweiter Art die erfaßten codierte Daten der Signale und/oder die analogen physikalischen Parameter des Datenaustausches zunächst mit Sollgrößen vergleicht und ein Vorverarbeitungsergebnis ableitet und dieses abgespeichert wird.

4. Verfahren nach Anspruch 3, **dadurch gekennzeichnet, daß** die Signale (S1,S2) überprüft werden hinsichtlich
a) Bit-, Protokoll- oder/und Prüfsummenfehlern und/oder
b) der Einhaltung vorgegebener Spannungsamplitudenbereiche und/oder
c) der Einhaltung vorgegebener Stromamplitudenbereiche und/oder
d) der Einhaltung vorgegebener Bereiche der Übertragungsrate und/oder
e) der Einhaltung vorgegebener Bereiche der Verzögerungszeit zwischen einem Steuerbefehl der Zentraleinheit (1) und einer Antwort durch ein Steuermodul (M.x), und
daraus das Vorverarbeitungsergebnis abgeleitet wird.

5. Verfahren nach Anspruch 3 oder 4, **dadurch gekennzeichnet, daß** vor dem Abspeichern eine Datenkomprimierung erfolgt, vorzugsweise indem nur dann Vorverarbeitungsergebnisse erzeugt oder aber die Vorverarbeitungsergebnisse nur dann abgespeichert werden, die bei der Durchführung einer Auswertung eine Unregelmäßigkeit, insbesondere eine Abweichung zu vorgegebenen Vergleichsgrößen aufweisen.

6. Verfahren nach einem der vorangehenden Ansprüche, **dadurch gekennzeichnet, daß** eine automatische Fehleranzeige aktiviert wird, falls die Anzahl der Abweichungen über ein vorgegebenes Maß hinausgeht, insbesondere der Speicher (5) voll ist.

7. Verfahren nach einem der vorangegangenen Ansprüche, **dadurch gekennzeichnet, daß** der Datenaustausch auf jeder Busleitung des Bussystems separat überwacht wird.
